Europäisches Patentamt

European Patent Office

Office européen des brevets

(11) Publication number: **0 174 938**
**B1**

# (12) EUROPEAN PATENT SPECIFICATION

(45) Date of publication of patent specification: **28.11.90**

(51) Int. Cl.⁵: **C 05 F 7/00, C 11 B 13/02**

(21) Application number: **85900893.0**

(22) Date of filing: **17.01.85**

(86) International application number:
**PCT/US85/00078**

(87) International publication number:
**WO 85/03285 01.08.85 Gazette 85/17**

(54) **FERTILIZER PROCESS.**

(30) Priority: **18.01.84 US 572202**
**31.01.84 US 575455**

(43) Date of publication of application:
**26.03.86 Bulletin 86/13**

(45) Publication of the grant of the patent:
**28.11.90 Bulletin 90/48**

(84) Designated Contracting States:
**AT BE CH DE FR GB LI LU NL SE**

(56) References cited:
**DE-A- 196 002**
**DE-C- 976 932**
**GB-A- 774 532**

**Journal of the American Oil Chemistes Soc., vol. 60, no. 2, February 1983 (Champaign, Illinois, US), J.B. Woerfel:"Alternatives for processing soapstock", pages 262A-265A**

(73) Proprietor: **DANIELS, Ralph S.**
**244 June Street**
**Worcester, MA 01602 (US)**

(72) Inventor: **DANIELS, Ralph S.**
**244 June Street**
**Worcester, MA 01602 (US)**

(74) Representative: **Lynd, Michael Arthur et al**
**STANLEY, POPPLEWELL, POOLE 57 Lincoln's Inn Fields**
**London WC2A 3LS (GB)**

EP 0 174 938 B1

Courier Press, Leamington Spa, England.

## Description

Vegetable oil refining essentially involves the removal of free fatty acids (FFA) and gums (to a lesser extent) from the crude oil. The removal is accomplished by mixing the oil with a hot, aqueous caustic solution and centrifugally separating the reaction products from the "refined" oil. The waste product, an alkaline mixture of saponified FFA and gums is referred to as soapstock.

The soapstock waste has commercial value because of the fatty acid content, but must be processed further in order to render it saleable. Processing simply amounts to breaking or splitting the soap into oil and water again by adding acid to approximately pH 1.5. After heating and mixing thoroughly, the acidulated soapstock is allowed to settle out. The oil that floats to the top is called "acid oil" and is drawn off for sale usually as an animal feed supplement. The aqueous phase remaining is termed "acid water". Acid water is the final waste product and is discarded. However, there is a disposal problem. Sewer authorities at a bare minimum require that the acid water be neutralized (NaOH is added) before the waste is allowed to be dumped. Some states have more stringent pollution control and have forced companies out of business because of acid water disposal. An example of such a process is described in British Patent Specification GB-A-774 532.

In 1982 a feasibility study was conducted to determine if better utilization of soapstock (higher value for the fatty acids in the acid oil) could be realized. The study was promising enough to warrant further development, and formally commenced in August 1983.

The initial goals for the development program were to produce a higher grade of fatty acid from the soapstock for use in an industrial soap solution and capturing the alkali stream used in the above for conversion to tri-sodium phosphate. However, after some marketing studies were done, I decided that it made more sense to make and market a liquid fertilizer concentrate from the aqueous phase of the acidulated soapstock rather than use the water for a TSP solution.

The first fertilizer product to be made was a 20-20-20 formulation (NPK — nitrogen, phosphorus, potassium) as a concentrate that was equivalent to dissolving 4 pounds (1.8 kilos) of dry commercial 20-20-20 in water to make 1 gallon (3.8 liters). Laboratory tests supposedly demonstrated that there was no problem maintaining a stable solution at below freezing temperatures. However, at the time when the product was to be made in production and shipped in 25 gallon (95 liter) drums, a solubility problem arose. Crystallization was occurring at room temperature due simply to oversaturation. Since this problem was physical, there was no practical solution.

The direction I took was a "back-to-basics" look at acidulating soapstock. Because of cost, sulfuric acid is used to split soapstock into acid oil and acid water. However, if fertilizer is the final objective, perhaps phosphoric acid can be used to acidulate — its 5 times higher cost justified by capturing all the phosphate in the water, thus providing the P in the standard NKP formulation. This had been tried once before and rejected when the water was analyzed for phosphate and only traces were found. However, the approach taken was to maintain the integrity of the fatty acid and, accordingly, acidulation was done only to pH 7. My initial experiments were designed to acidulate the soapstock to pH 6, 5, 4, 3, 2, and 1.5 and then analyze both the acid oil and the acid water for phosphate. If this proved commercially feasible, I would then refine crude soybean oil with potassium hydroxide rather than the industry standard use of sodium hydroxide (NaOH is cheaper than KOH) and analyze for potassium in the water. I would then make a decision on the commercial use of KOH based on the amount captured in the water and thus providing the K component of the NPK formulation.

The results of the phosphoric acid acidulations showed that too much phosphate was tied up in the acid oil to warrant use economically. However, the observation that most interested me was that *the amount of phosphate in the acid oil was essentially constant* and the additional acid used to reduce the pH was accordingly found in the water as increasing concentration of phosphate. The percentage of phosphate in the oil ranged from 2.3 to 3.0 on a weight-weight basis. Based on this result, I hypothesized using sulfuric acid first to acidulate to a given pH and then using phosphoric acid to reduce the pH to 1.5. The above acidulation experiments were repeated but sulfuric acid was used to bring the pH to 6 and then phosphoric acid used to reduce pH 1.5; sulfuric acid to pH 5 then phosphoric acid to pH 1.5 and so on. These results proved even more interesting.

The analysis of the acid oil for phosphate and acid water for phosphate and sulfate showed that the amount of phosphate in the oil again remained constant, but it was only present in greatly reduced amounts, 0.57% to 0.82% on a weight-weight basis. As would be expected, the respectively increasing amount of sulfuric acid found its way into the water as increased percentages of sulfate, and the phosphoric acid as decreased amounts of phosphates. However, with such a small amount of phosphate trapped in the oil, the process was commercially feasible since the bulk was dissolved in the water. It had the commercial advantage of using less sulfuric acid to acidulate and an almost complete capture of phosphate — a commercial advantage in making fertilizer.

As if that were not enough, the most important discovery was made in reviewing the results quantitatively to cross check the exact amounts used against the exact amounts found. What I discovered was that in every case there was more phosphate in the water than was used in the acidulation with phosphoric acid. At first I questioned the laboratory methods and results. I then analyzed the soapstock before acidulation for phosphate. This provided the answer. The soapstock contained phosphorus bearing compounds that were removed from the crude soybean oil during the refining process (gums, etc.) that together with the phosphoric acid added in minute amounts to the crude oil (500 ppm) to facilitate gum removal were released into the acid water during the acidulation process. This discovery greatly enhances the economics of the liquid fertilizer since phosphate is the most expensive component of the NPK formulation. 1-2% phosphate was found in the soapstock and a comparable amount was found in the acid oil and water. This is a significant amount in that a 1 pound per gallon (120 grams per liter) concentration of dry commercial 20-20-20 fertilizer in water is approximately 1.9% by weight.

This discovery suggested analysis of the acid water in conventional soapstock processing (with sulfuric acid) to determine if the phosphate is present. Analysis of the acid water from conventional soybean processing indicated the presence of sufficient phosphate to justify use of the acid water as a fertilizer after reducing the acidity, especially with a nutrient-type base such as urea or ammonium hydroxide.

After realizing the commercial significance of the phosphate discovery, it logically followed to analyze the acid water for nitrogen. It was found to be present at 0.16% which, although a small amount by itself, does represent 8-10% of the organic nitrogen requirement in the heretofore mentioned 1 pound per gallon (120 grams per liter) of 20-20-20.

Therefore, the significance of these experiments, conclusions and discoveries is the practical and commercial use of a waste product that, otherwise, requires chemicals and equipment to treat, is a pollution control problem, and costs money to throw away.

The fertilizer, depending upon the final formulation (i.e., the ingredients added and their respective concentrations), has wide use for most agricultural crops. In addition, when properly formulated and packaged has special advantage in the greenhouse grown plant industry. This industry requires a higher quality fertilizer for specific application. Presently, the grower is dissolving solid granular fertilizer in a concentration of 1 pound per gallon (120 grams per liter) of water and using this concentrate to feed the daily watering with a precise quantity of nutrients. There are several disadvantages inherent in using dry fertilizers in this way. First the fertilizer must be mixed until it is completely dissolved (this takes time and is inconvenient), secondly and most important, the watering systems used in the greenhouse have become very precise and employ tubes and fittings of very small diameters, hypodermic syringe like. They tend to get clogged up with insolubles present in greater or lesser degree with all solid fertilizers. A liquid based fertilizer not only eliminates the above problems, but also contains less "fill" or superfluous ingredients that tend to compromise the integrity of the growing medium. Most of the "fill" is water.

The product to be manufactured is a supersaturated solution using acid water as the starting vehicle, and adding sufficient Nitrogen and urea and/or ammonium nitrate; Phosphoric acid; Potassium hydroxide for $K$ and other micronutrients as salts or chelates (Sulfur is present in varying degrees depending upon how much is used/required when acidulation is done) to proper concentrations to make a desired final product, i.e., 20-20-20, 5-10-30, etc.

The supersaturated solutions will be formulated at a concentration equivalent to 5 pounds per gallon (600 grams per liter) at a temperature of approximately 100 degrees F (38 degrees C; the ingredients are soluble at this temperature) and packaged in 5 gallon (19 liter) containers (bag in box). The 5 gallon containers will contain the equivalent of 25 pounds (11.3 kilos) of dry fertilizer: the industry uses 25 pound bags. When the temperature drops, the solution will crystalize out as expected. However, this does not pose a problem any more. This grower need only pour the "slurry" into a container and add water to make 25 or 50 gallons (95-190 liters) as he currently does with one or two 25 pound (11.3 kilo) bags to 25 to 50 gallons (95-190 liters) of water. The crystals dissolve almost instantly, thus producing a concentrate of 1 pound per gallon (120 grams per liter) with no time needed for mixing and no suspended particles.

The best way to produce the product initially would be to refine the crude oil with potassium hydroxide; acidulate the potassium soapstock with sulfuric acid to pH 7 and below (depending upon how much sulfate is required) and finish the acidulation with phosphoric acid to pH 1.5. The product would then be analyzed for NPK and nutrient would be added to a desired final formulation.

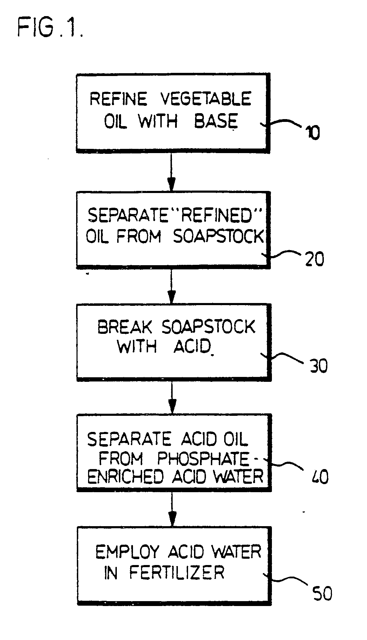

## Claims

1. A method of processing vegetable oils and by-products including the steps of harvesting oil-containing vegetables from a growing area, extracting crude vegetable oil from the vegetables, and forming a soapstock by refining the crude vegetable oil with base; separating the refined vegetable oil from the soapstock; treating the resulting soapstock with an acid to form a mixture of an acid water aqueous phase and an acid oil; separating the resulting acid oil from the resulting acid water aqueous phase; characterized by the step of: applying the aqueous phase as a fertilizer to soil or growing plants.

2. A method as recited in Claim 1, wherein the acid water aqueous phase is at least partially neutralized with a nutrient-containing base before application as a fertilizer.

3. A method as recited in Claim 1 or 2, wherein the crude vegetable oil is refined with potassium hydroxide.

4. A method as recited in Claims 1, 2, or 3, wherein the acid used to treat the resulting soapstock is phosphoric acid.

5. A method as recited in Claims 1, 2, or 3, wherein the soapstock is treated by bringing the soapstock to a first pH of about 7 or less using sulfuric acid and then taking the soapstock from the first pH to approximately pH 1.5 using a second acid in an amount to maximize the phosphate content of the acid water, at least a portion of the second acid being phosphoric acid.

6. A method as recited in Claims 2, 3, 4, or 5 wherein the nutrient base used to neutralize the acid water aqueous phase is a nitrogen containing base chosen from the group consisting of ammonium hydroxide, and urea.

7. A method as recited in Claims 2, 3, 4, or 5, wherein the nutrient base used to neutralize the acid water aqueous phase is potassium hydroxide.

8. A method as recited in Claims 2, 3, 4, or 5, wherein the acid water aqueous phase is neutralized by a combination of nitrogen containing base and potassium hydroxide, the proportion chosen depending on the desired proportion of nitrogen to potassium in the resulting fertilizer.

9. A method as recited in Claims 2, 3, 4, 5, 6, 7, or 8 further comprising the step of:
before applying the aqueous phase as a fertilizer, testing the aqueous phase for nutrients and enriching it as needed.

10. An integrated vegetable oil processing method including the steps recited in Claims 2, 3, 4, 5, 6, 7, 8 or 9 and further comprising the step of:
returning the aqueous phase to the growing area from which the vegetables were harvested.

11. A method of fertilizing plants using precision fertilizer delivery systems having small passages which would be adversely affected by insolubles, including the steps of claims 2, 3, 4, 5, 6, 7, 8, or 9 and further including the step of:
feeding the acid water through the delivery system to the plants.

12. The use as a fertilizer of the acid water aqueous phase produced by the steps of harvesting oil-containing vegetables from a growing area, extracting crude vegetable oil from the vegetables, and forming a soapstock by refining the crude vegetable oil with base; separating the refined vegetable oil from the soapstock; treating the resulting soapstock with an acid to form a mixture of an acid water aqueous phase and an acid oil; and separating the resulting acid oil from the resulting acid water aqueous phase.

13. A fertilizer comprising the product obtained by harvesting oil-containing vegetables from a growing area, extracting crude vegetable oil from the vegetables, and forming a soapstock by refining the crude vegetable oil with base; separating the refined vegetable oil from the soapstock; treating the resulting soapstock with an acid to form a mixture of an acid water aqueous phase and an acid oil; and separating the resulting acid water aqueous phase.

## Patentansprüche

1. Verfahren zur Behandlung von pflanzlichen Ölen und Nebenprodukten, das als Stufen das Ernten von ölhaltigen Pflanzen in einem Wachstumsgebiet, das Extrahieren von rohem pflanzlichem Öl aus den Pflanzen und das Bilden eines Soapstocks bzw. Seifenstocks durch Raffinieren des rohen pflanzlichen Öls mit einer Base, das Trennen des raffinierten pflanzlichen Öls von dem Soapstock, das Behandeln des erhaltenen Soapstocks mit einer Säure zur Bildung einer Mischung aus einer sauren wäßrigen Phase und einem sauren Öl, das Trennen des erhaltenen sauren Öls von der erhaltenen sauren wäßrigen Phase einschließt, dadurch gekennzeichnet, daß die wäßrige Phase als Düngemittel auf Erde- oder Wachstumspflanzen aufgebracht wird.

2. Verfahren nach Anspruch 1, worin die saure wäßrige Phase wenigstens teilweise mit einer nährstoffhaltigen Base vor dem Aufbringen als Düngemittel neutralisiert wird.

3. Verfahren nach Anspruch 1 oder 2, worin das rohe pflanzliche Öl mit Kaliumhydroxid raffiniert wird.

4. Verfahren nach den Ansprüchen 1, 2 oder 3, worin die Säure, die zur Behandlung des erhaltenen Soapstocks verwendet wird, Phosphorsäure ist.

5. Verfahren nach den Ansprüchen 1, 2 oder 3, worin der Soapstock behandelt wird, indem er auf einen ersten pH von etwa 7 oder weniger unter Verwendung von Schwefelsäure und dann von dem ersten pH auf ungefähr pH 1,5 unter Verwendung einer zweiten Säure, um den Phosphatgehalt des sauren Wassers zu maximieren, gebracht wird, wobei wenigstens ein Teil der zweiten Säure Phosphorsäure ist.

6. Verfahren nach den Ansprüche 2, 3, 4 oder 5, worin die Nährstoffbase, die zum Neutralisieren der sauren wäßrigen Phase verwendet wird, eine stickstoffhaltige Base, gewählt aus der Gruppe, bestehend aus Ammoniumhydroxid und Harnstoff, ist.

7. Verfahren nach den Ansprüchen 2, 3, 4 oder 5, worin die Nährstoffbase, die zum Neutralisieren der sauren wäßrigen Phase verwendet wird, Kaliumhydroxid ist.

8. Verfahren nach den Ansprüchen 2, 3, 4 oder 5, worin die saure wäßrige Phase durch eine Kombination einer stickstoffhaltigen Base und Kaliumhydroxid neutralisiert wird, wobei der Anteil in Abhängigkeit von dem gewünschten Anteil von Stickstoff zu Kalium in dem erhaltenen Düngemittel gewählt wird.

9. Verfahren nach den Ansprüchen 2, 3, 4, 5, 6, 7 oder 8, das vor dem Aufbringen der wäßrigen Phase als Düngemittel eine Stufe des Testens der wäßrigen Phase auf Nährstoffe und des Anreicherns, wenn dies erforderlich ist, umfaßt.

10. Integriertes Behandlungsverfahren für pflanzliches Öl, das die Stufen der Ansprüche 2, 3, 4, 5, 6, 7, 8 oder 9 einschließt und weiterhin die Stufe der Rückführung der wäßrigen Phase in das Wachstumsgebiet, in dem die Pflanzen geerntet wurden, umfaßt.

11. Verfahren zum Düngen von Pflanzen unter Verwendung von Präzisionsdüngemittel fördersystemen mit kleinen Durchgängen die durch unlösliche Stoffe beeinträchtigt werden, das die Stufen der Ansprüche 2, 3, 4, 5, 6, 7, 8 oder 9 einschließt und weiterhin die Stufe des Zuführens des sauren Wassers durch das Fördersystem zu den Pflanzen einschließt.

12. Verwendung einer sauren wäßrigen Phase als Düngemittel, hergestellt durch Ernten von ölhaltigen Pflanzen in einem Wachstumsgebiet, Extrahieren von rohem pflanzlichen Öl aus den Pflanzen und Bilden eines Soapstocks durch Raffinieren des rohen pflanzlichen Öls mit einer Base, Trennen des raffinierten pflanzlichen Öls von dem Soapstock, Behandeln des erhaltenen Soapstocks mit einer Säure zur Bildung einer Mischung aus einer sauren wäßrigen Phase und einem sauren Öl und Trennen des erhaltenen sauren Öls von der erhaltenen sauren wäßrigen Phase.

13. Düngemittel, umfassend das Produkt, erhalten durch Ernten von ölhaltigen Pflanzen in einem Wachstumsgebiet, Extrahieren des rohen pflanzlichen Öls aus den Pflanzen und Bilden eines Soapstocks durch Raffinieren des rohen pflanzlichen Öls mit einer Base, Trennen des raffinierten pflanzlichen Öls von dem Soapstock, Behandeln des erhaltenen Soapstocks mit einer Säure zur Bildung einer Mischung aus einer sauren wäßrigen Phase und einem sauren Öl und Trennen der erhaltenen sauren wäßrigen Phase.

**Revendications**

1. Un procédé pour traiter des huiles végétales et des sous-produits comprenant les étapes consistant à récolter des végétaux contenant de l'huile d'une aire de culture, extraire l'huile végétale brute des végétaux, et former une matière savonneuse par raffinage de l'huile végétale brute par une base; séparer l'huile végétale raffinée d'avec la matière savonneuse; traiter la matière savonneuse résultante par un acide pour former un mélange d'une phase aqueuse d'eau acide et d'une huile acide; séparer l'huile acide résultante d'avec la phase aqueuse d'eau acide résultante; caractérisé par la phase consistant à:
    appliquer la phase aqueuse en tant que fertilisant à un sol ou à des plantes cultivées.

2. Un procédé tel qu'exposé à la revendication 1, dans lequel la phase aqueuse d'eau acide est au moins partiellement neutralisée par une base contenant une substance nutritive avant d'être appliquée comme fertilisant.

3. Un procédé tel qu'exposé à la revendication 1 ou 2, dans lequel l'huile végétale brute est raffinée par de l'hydroxyde de potassium.

4. Un procédé tel qu'exposé aux revendications 1, 2 ou 3, dans lequel l'acide utilisé pour traiter la matière savonneuse résultante est de l'acide phosphorique.

5. Un procédé tel qu'exposé aux revendications 1, 2 ou 3, dans lequel la matière savonneuse est traitée en amenant la matière savonneuse à un premier pH d'environ 7 ou moins, en utilisant de l'acide sulfurique et en amenant ensuite la matière savonneuse du premier pH à environ pH 1,5 en utilisant un second acide en quantité propre à maximiser la teneur en phosphate de l'eau acide, au moins une portion du second acide étant de l'acide phosphorique.

6. Un procédé tel qu'exposé aux revendications 2, 3, 4 ou 5, dans lequel la base nutritive utilisée pour neutraliser la phase aqueuse d'eau acide est une base contenant de l'azote choisie dans le groupe constitué par l'hydroxyde d'ammonium et l'urée.

7. Un procédé tel qu'exposé aux revendications 2, 3, 4 ou 5, dans lequel la base nutritive utilisée pour neutraliser la phase aqueuse d'eau acide est l'hydroxyde de potassium.

8. Un procédé tel qu'exposé aux revendications 2, 3, 4 ou 5, dans lequel la phase aqueuse d'eau acide est neutralisée par une combinaison d'une base contenant de l'azote et d'hydroxyde de potassium, la proportion choisie dépendant de la proportion désirée d'azote au potassium dans le fertilisant résultant.

9. Un procédé tel qu'exposé aux revendications 2, 3, 4, 5, 6, 7 ou 8 comprenant en outre l'étape consistant à:
    avant d'appliquer la phase aqueuse en tant que fertilisant, déterminer les matières nutritives de la phase aqueuse et l'enrichir si nécessaire.

10. Un procédé de traitement intégré d'huiles végétales comprenant les étapes exposées aux revendications 2, 3, 4, 5, 6, 7, 8 ou 9 et comprenant en outre l'étape consistant à:
    ramener la phase aqueuse à l'aire de culture de laquelle les végétaux ont été récoltés.

11. Un procédé pour fertiliser des plantes en utilisant des systèmes de précision pour la fourniture de fertilisants ayant des passages étroits qui seraient effectés négativement par des corps insolubles, comprenant les étapes des revendications 2, 3, 4, 5, 6, 7, 8 ou 9 et comprenant en outre l'étape consistant à:
    amener l'eau acide aux plantes à travers le système de fourniture.

12. L'utilisation en tant que fertilisant d'une phase aqueuse d'eau acide produite par les étapes consistant à récolter des végétaux contenant de l'huile d'une aire de culture, extraire l'huile végétale brute des végétaux, et former une matière savonneuse par raffinage de l'huile végétale brute par une base; séparer l'huile végétale raffinée d'avec la matière savonneuse; traiter la matière savonneuse résultante par un acide pour former un mélange d'une phase aqueuse d'eau acide et d'une huile acide et séparer l'huile acide résultante d'avec la phase aqueuse d'eau acide résultante.

13. Un fertilisant comprenant le produit obtenu par récolte des végétaux contenant de l'huile d'une aire de culture, extraction de l'huile végétale brute des végétaux, et formation d'une matière savonneuse par raffinage de l'huile végétale brute par une base; séparation de l'huile végétale raffinée d'avec la matière savonneuse; traitement de la matière savonneuse résultante par un acide pour former un mélange d'une phase aqueuse d'eau acide et d'une huile acide et séparation de l'huile acide résultante d'avec la phase aqueuse d'eau acide résultante.

FIG.1.

REFINE VEGETABLE
OIL WITH BASE          ~ 10

↓

SEPARATE"REFINED"
OIL FROM SOAPSTOCK     ~ 20

↓

BREAK SOAPSTOCK
WITH ACID.             ~ 30

↓

SEPARATE ACID OIL
FROM PHOSPHATE -
ENRICHED ACID WATER    ~ 40

↓

EMPLOY ACID WATER
IN FERTILIZER          ~ 50